# EUROPEAN PATENT APPLICATION

(11) **EP 3 093 804 A1**
(43) Date of publication of application: **16.11.2016**
(21) Application number: 16169634.9
(22) Date of filing: 13.05.2016
(51) Int. Cl.: G06Q 10/00, G06Q 10/06, G06Q 50/20

(54) **UNLOCKING TIME TO NON-EDUCATIONAL CONTENT**

(30) Priority: 13.05.2015 US 201514711675
(71) Applicant: Google Inc., Mountain View, CA 94043 (US)
(72) Inventor: Hampson, Courtney, Mountain View, CA California 94043 (US); Sanio, Jason Robert Richard, Mountain View, CA California 94043 (US)
(74) Representative: Williams, Michael David

(57) **Abstract**

Methods, systems, and apparatus, including computer programs encoded on a computer storage medium, for unlocking time to non-educational tasks on devices. In one aspect, a method includes receiving an indication that a user has completed the first educational task; calculating a first educational value score for the first educational task; calculating a first amount of earned non-educational time based on the first educational value score and adding the first amount to a total amount of earned non-educational time maintained in a user profile of the user; identifying a second educational task of the plurality of educational tasks; receiving an indication that the user has completed the second educational task; and in response, updating the total amount of earned non-educational time associated with the user profile of the user.

## Description

### BACKGROUND

This specification relates to monitoring and providing access to content on devices.

A parental control application limits access to the amount of time certain users, e.g., children, spend on certain types of content, e.g. web pages, images, or multimedia content, presented to the users on a device. For example, a parental control application may limit the amount of time a user accesses video games on a mobile device.

### SUMMARY

In general, one aspect of the subject matter described in this document can be embodied in a technique that includes receiving, in a computer system, from a first content provider of a first educational task, an indication that a user has completed the first educational task, the first educational task being one of a plurality of educational tasks, each educational task being associated with a respective educational value score; calculating, in the computer system, a first educational value score for the first educational task based on (i) a first educational resource score, (ii) a first educational difficulty score, and (iii) a first user-specific parent selection score of the first educational task; calculating, in the computer system, a first amount of earned non-educational time based on the first educational value score and adding the first amount to a total amount of earned non-educational time maintained in a user profile of the user; identifying, by the computer system, a second educational task of the plurality of educational tasks having a second educational value score that is greater than the first educational value score; providing, by the computer system, data identifying the second educational task to the user; receiving, in the system, from a second content provider of the second educational task, an indication that the user has completed the second educational task; and in response, updating, in the computer system, the total amount of earned non-educational time associated with the user profile of the user using a second amount of earned non-educational time for completing the second educational task.

The second educational task of the plurality of educational tasks may have a second educational value score has a second educational difficulty score greater than the first educational difficulty score and a second user-specific parent selection score that is at least equal to the first user-specific parent selection score.

Calculating the first amount of earned non-educational time may comprise calculating the first amount of earned non-educational time as W × FEVS. W may be a weighting factor and FEVS may be the first educational value score.

The method may further comprise receiving an indication from the user that the user requests a non-educational activity, determining that there is non-educational time to perform the non-educational activity, and permitting the user access to the non-educational activity. Additionally, the method may further comprise receiving an indication that the user has completed the non-educational activity; and in response, determining a total amount of remaining non-educational time by subtracting time spent by the user on the non-educational activity from the total amount of earned non-educational time, and updating the total amount of earned non-educational time maintained in the user profile of the user with the total amount of remaining non-educational time.

The first educational resource score may be a measure of educational content in a resource that includes the first educational task.

The first educational difficulty score may indicate a grade level for the first educational task based on grade level standards.

The first user-specific parent selection score may be a user-specific attribute of the first educational task that is configured by a parent to adjust the first educational value score of the first educational task for the user.

Other embodiments of this aspect include corresponding systems, apparatus, and computer programs encoded on computer storage devices, each configured to perform the actions of the methods. A system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

The subject matter described in this specification can be implemented in particular embodiments so as to realize one or more of the following advantages. Students are incentivized to complete challenging educational tasks. In particular, students earn additional non-educational time for completing more difficult educational tasks. Students are also provided a record of completed content. This encourages students to complete educational tasks and discuss the tasks with parents and instructors.

The details of one or more embodiments of the subject matter described in this document are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example educational task manager.
FIG. 2 is a flow diagram of an example process for executing content requests.
FIG. 3 is a flow diagram of an example process for suggesting a more challenging educational task.
FIG. 4 is a flow diagram of an example process for accessing a non-educational task.

Like reference numbers and designations in the various drawings indicate like elements.

### DETAILED DESCRIPTION

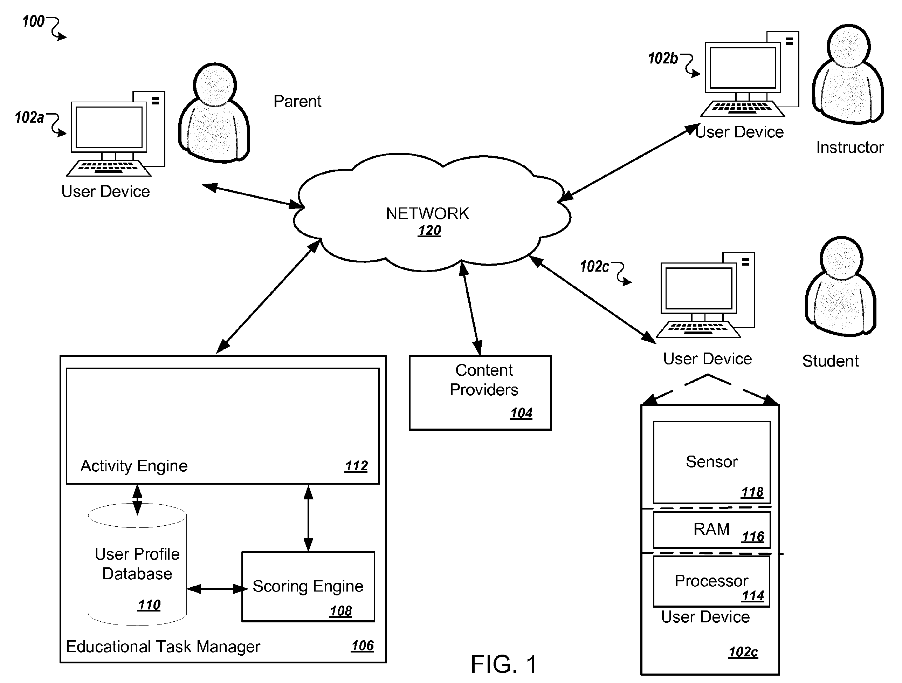

FIG. 1 shows an example educational task manager 106. The educational task manager 106 is an example of a system implemented as one or more computer programs on one or more computers in one or more locations, in which the systems, components, and techniques described below, are implemented.

The educational task manager 106 processes content requests for resources that are either educational or non-educational. The educational task manager receives the content requests from one or more users on one or more user devices, e.g., user devices 102a-c, of the system across a data communication network 120. The data communication network 120, e.g., a local area network (LAN) or wide area network (WAN), e.g., the Internet, or a combination of networks, connects a parent on user device 102a, an instructor on user device 102b, and a student on user device 102c with the educational task manager 106. The user devices, e.g., user devices 102a-c, generally include a processor 114, a random access memory (RAM) 116, and one or more sensors 118. The sensors 118, for example, may track eye movement.

Generally, a content request is a request to access, display, or interact with a resource by the user. For example, the content request may be a request to access and interact with web-based applications, e.g., web-email, web-games, or java applet. As another example, the content request may be a request to display and interact with web articles, e.g., news articles, blogs, or movie reviews. As another example, the content request may be a request to download or stream media content. As another example, the content request may be a request to access, display, and interact with a web-based retailer. The educational task manager 106 processes different types of content requests for different resource types, e.g., content requests to display and interact with either educational or non-educational websites and content requests to stream media content.

The educational task manager 106 maintains a user profile database 110 that includes one or more user profiles. A user must sign into the educational task manager 106 to request and access resources. The educational task manager 106 uses the user profile database 110 to store and maintain information about each user including user login credentials. The user login credentials include a username and password. Login credentials are unique and correspond to a respective user profile. The user profile database 110 identifies a user profile for a user based on the user login credentials. Each user profile is also of a specific type, e.g., a type for parents, a type for students, and a type for instructors. The user profile database 110 contains an attribute for each user profile that indicates the type of user profile. This attribute identifies that a user is an instructor, a parent, or a student.

Each type of profile includes attributes unique to the type. For example, a user profile for a student includes grade level information of the student, the amount of time available to a student to access non-educational content, and a history of educational tasks completed by the student. The grade level information may include information about the grade level of the student specific to each of multiple subjects. The grade level information may also include a composite grade level of the student.

The user profile database 110 includes a parent profile for the parent of the student. A user with a parent profile may create student profiles for other users and configure attributes of the one or more created student profiles over the data communication network 120. Student profiles include attributes that are configurable by a parent or an instructor. Example attributes include a weighting factor that determines the amount of non-educational time a user earns for a particular educational task. Other attributes include a blacklist or whitelist of educational websites, a parent selection score for particular educational tasks, and a maximum time limit on the amount of non-educational time a student may earn.

The weighting factor sets a ratio between the amount of earned non-educational time and the points earned for completing an educational task. In some implementations, the weighting factor has a default value. In other implementations, the weighting factor is configurable by the parent or the instructor. For example, the parent may set the weighting factor to a ratio of 10 minutes of non-educational time for every 100 points earned. The parent also has access to the history of completed educational tasks that an activity engine 112 stores in the user profile database 110 for each student.

The user profile database 110 may include one or more instructor profiles for one or more instructors. A user with an instructor profile has access to information in the user profile of a group of students. An instructor profile contains attributes that are configurable across multiple student profiles including the attributes that a parent profile may configure for a particular student profile. An instructor profile may configure or view additional attributes of particular student profiles. For example, an instructor may configure the grade and difficulty levels of various educational tasks, set an educational baseline, assign a lesson plan, or view the history of completed educational tasks in the profile of the student.

The user profile database 110 permits the instructor or parent to access these particular attributes in a particular student profile by designating these particular attributes as group attributes. An instructor or parent has additional system privileges that permit the instructor or parent to access these group attributes for a particular student.

The educational task manager 106 also includes the activity engine 112 that receives a content request submitted to the educational task manager 106. The activity engine 112 monitors and manages user interactions with one or more content providers 104 including tracking user activity, providing access control to non-educational content, and managing completion of educational tasks. For example, a student may request to display non-educational streaming content on a website. The activity engine 112 receives the request and either permits or denies access to the streaming content based on the amount of time needed to complete the non-educational task and the amount of non-educational time that is available to the user.

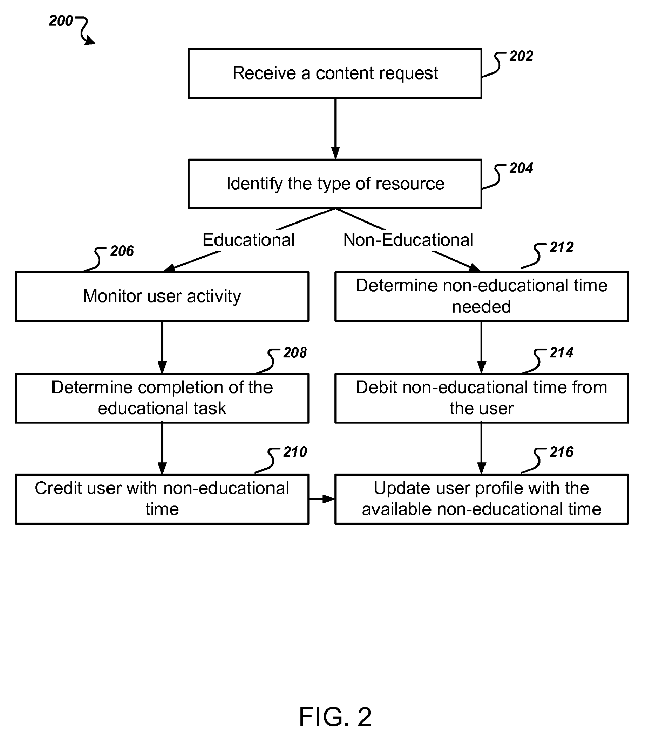

The scoring engine 108 assigns an educational value score to each educational task to compute the amount of earned non-educational time for completing an educational task. An educational value score represents the educational value of a respective task. The educational value score is a function of an educational resource score, an educational difficulty score, and a user-specific parent selection score. The activity engine 112 credits the user profile with non-educational time based on the educational value score of the educational task and a weighting factor. The process for executing content requests is described in more detail below with reference to FIG. 2.

FIG. 2 is a flow diagram of an example process 200 for executing content requests. The process 200 is performed by a system of one or more computers. For example, an educational task manager system, e.g., the educational task manager 106 of FIG. 1, appropriately programmed, can perform the process 200.

The system receives a content request (step 202). Each content request is for a resource of a specific type, e.g., either an educational or a non-educational resource. Generally, a content request is a request to access, display, or interact with a resource by the user. The content request may also be a request to solve a set of math problems, a request to stream a documentary, or a set of math problems includes individual problems.

The system identifies the type of the resource by analyzing the content of the resource (step 204). In some implementations the system searches for keywords that are relevant to an educational website in the resource or in the resource locator. An instructor profile, for example, may provide keywords to the system that indicate that a resource is educational, and then, the system clusters the keywords found on a website together to determine the context of the resource. The system may consider other factors including the domain of the resource in determining the content. In other implementations, the system analyzes resources that link to the requested resource and resources that are linked by the requested resource. The system may also use configurable whitelists and blacklists of resources or other indicators to identify a resource as educational or non-educational. In some implementations, the system classifies each resource as either an educational resource or non-educational resource. In other implementations, the system may classify a resource as partially educational. The system calculates an educational resource score that represents the amount of educational content contained in the resource.

If the system determines the resource is an educational resource, the system monitors the activity of the user (step 206). The system monitors the activity of the user to determine that the user is active in completing the educational tasks in the resource. The system may analyze the time spent at the educational resource or perform other analytics to determine user activity. In some implementations, the system analyzes user interactions with the resource. User interactions include mouse movements, page scrolling, completion of tasks in a lesson plan, navigation within the resource, or other forms of measurable active participation. For example, the system may provide pop-up notifications that require the student to respond while content is streaming to indicate that the student is active. The system may also block access to other sites while the student is viewing the educational content. In other implementations, the system may receive information from the student user device to monitor activity of the student. For example, the system may receive information from a sensor on the user device of the student that tracks eye movement and matches the information with a location on the resource to determine user activity. A student receives credit only if the student actively completes the educational task.

The system determines that the user completed the educational task (step 208). The system may capture an indication from the content provider that the user completed an educational task. For example, the content provider may send an indication to the user device of the student or to the system that the student has completed a task in a lesson plan or that the student has scrolled through the entire resource and navigated away from the resource. Other indications of the student completing an educational task include an indication of an answer submission or an indication that the student finished streaming content. The system captures these indications and rewards the student with non-educational time.

In response to receiving an indication that the user completed an educational task, the system credits the user with non-educational time (210). The system calculates the amount of earned non-educational time based on a weighting factor and an educational value score associated with the educational task. In some implementations, the weighting factor is a configurable attribute in the student profile. In other implementations, the weighting factor is set to a predetermined value. The educational value score (EVS) is a function of an educational resource score (ERS), an educational difficulty score (EDS), and a user-specific parent selection score (PSS). That is, the educational value score is based on solving (EVS) = *f*(ESS, EDS, PSS), and the system calculates an amount of earned non-educational time (ENET) based on solving ENET = W * EVS, where W is the weighting factor. The system stores the calculated amount of earned non-educational time in the user profile associated with the student. When the system receives subsequent indications that the user has completed additional educational tasks, the system adds the additional earned non-educational time to the total time that remains unused by the user.

The educational resource score indicates if a resource is an educational resource or not. For example, the system may assign an educational resource score of 1 to an encyclopedia that provides factual information on various subjects or a resource with a set of math problems, and the system may assign an educational resource score of 0 to a website that streams an action movie. In some implementations, the system may assign a resource an educational resource score that is between 0 and 1 if the system determines that the resource is only partially educational, e.g., a website that analyzes baseball statistics.

The educational difficulty score indicates the difficulty of a task based on a grade level appropriate baseline. The system uses grade level standards based on the age and location of a student to determine the appropriateness of content for the student, e.g., the common core standards in the United States. The system creates a baseline for content at each grade level by crawling the web for known material of the given grade level. In some implementations, creating the baseline includes determining the reading level of the task, identifying the level of engagement a user has with the content of the task, and the number of steps that a user has to perform to complete the task. A resource that has more complex tasks that require user interaction and a number of steps to complete suggests a greater difficulty level for the resource.

The parent selection score identifies that a user with the parent profile considers the educational task as educationally relevant to the user. The parent identifies a particular resource for a particular student and assigns a parent selection score for the particular resource for the particular student. For example, a parent may assign a higher parent selection score to math problems if a particular student has difficulty in math or a parent may assign a lower parent selection score to a lecture on reading comprehension if a student does not need additional help in reading. A parent may configure the parent selection score of an educational task for a particular student based on information in the history of completed tasks of the particular student to incentivize the student to complete educational tasks in specific subject areas. The system may store the information about the parent selection score for the particular resource in the particular student profile.

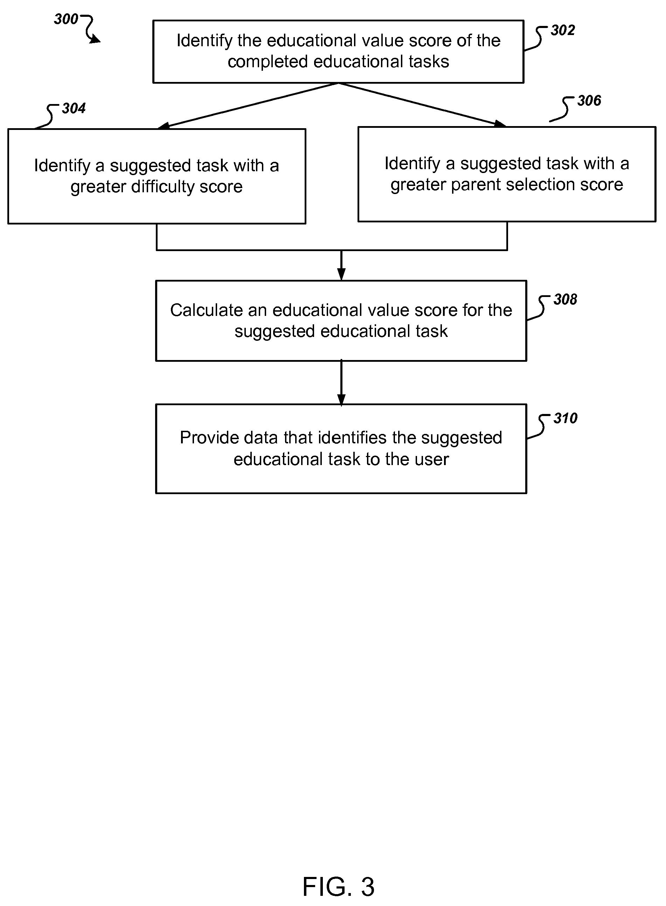

In some implementations, the system suggests a more challenging educational task in response to receiving an indication that the student has completed an educational activity. The process for suggesting a more challenging educational task is described in more detail below with reference to FIG. 3.

If the system determines that the resource is non-educational, the system determines the amount of non-educational time needed to complete the non-educational activity (step 212). The system may determine the amount of non-educational time needed based on metadata of the resource. For example, for a request to stream a non-educational movie, the system may require that the student has an amount of available non-educational time greater than or equal to that of the length of the movie. In some cases, e.g., playing a web-based video game, the amount of non-educational time needed to complete the activity will vary. In these cases, the system may set a default amount of non-educational time needed to access the non-educational task and permit the student to access the non-educational task until the student exhausts all available non-educational time.

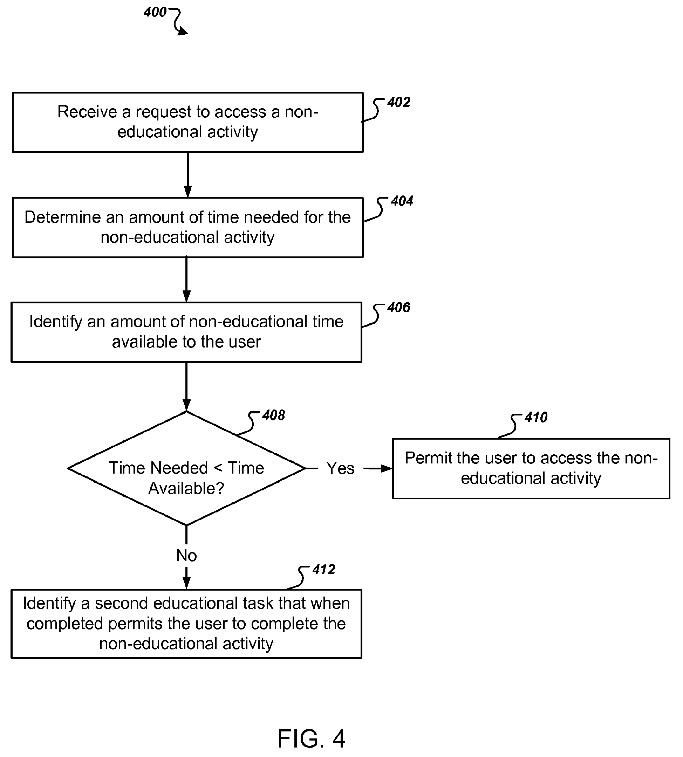

The system deducts non-educational time from the user when the user engages in non-educational activities (step 214). The system may notify the user of the remaining available non-educational time as the user exhausts the non-educational time. The system denies access to the non-educational content when the user has insufficient non-educational time to complete a non-educational activity. In some implementations, the system suggests an educational task for the user to complete to obtain the necessary non-educational time to complete the non-educational activity. The process for suggesting an additional educational task that when completed permits the student to complete the non-educational activity is described in more detail below with reference to FIG. 4.

The system updates the user profile of the user with the non-educational time either earned or used by the user (step 216). The system updates the non-educational time by adding the amount earned to the existing available non-educational time or by subtracting the amount used from the existing available non-educational time.

FIG. 3 is a flow diagram of an example process 300 for providing a more challenging activity to the student. The process 300 is performed by a system of one or more computers. For example, an educational task manager system, e.g., the educational task manager 106 of FIG. 1, appropriately programmed, can perform the process 300.

The system identifies the educational value score of the last completed educational task (step 302). The system uses the educational value score to suggest a more challenging educational task by identifying another educational task that has an educational value score that is greater than the educational value score of the last completed task. In some implementations, the system uses the history of completed educational tasks in the profile of the student to identify a suggested educational task with a greater level of difficulty than the completed educational tasks. In other implementations the system identifies a suggested educational task that has a user-specific parent selection score that is greater than the parent selection score of the last completed task.

The system identifies a suggested educational task that has an educational difficulty score that is greater than the educational difficulty score of the last completed educational task (step 304). The parent selection score of the suggested educational task is at least equal to the parent selection score of the last completed task. In other implementations, the system identifies a parent selection score for the suggested educational task that is greater than the parent selection score of last completed educational task and the educational difficulty score of the suggested task is at least equal to that of the educational difficulty score of the last completed task (step 306). The system sets an educational resource score for the suggested educational task to indicate that the suggested educational task contains educational content.

The system calculates an educational value score for the suggested educational task using the educational difficulty score, the educational resource score, and the parent selection score to ensure that educational value score for the suggested educational task is greater than the educational value score of the completed educational task. (step 308).

The system provides data that identifies the suggested educational task to the user (310). The system may provide information about the suggested educational task to the user or provide a location of the suggested educational task. After completing an educational task, a student may instead want to access a non-educational resource instead of completing an additional educational task.

FIG. 4 is a flow diagram of an example process 400 for accessing a non-educational activity. The process 400 is performed by a system of one or more computers. For example, an educational task manager system, e.g., the educational task manager 106 of FIG. 1, appropriately programmed, can perform the process 400.

The system receives a request to access a non-educational activity (step 402). The system determines an amount of time necessary to complete the non-educational activity (step 404). The system may determine the amount of non-educational time needed based on metadata of the resource. In other implementations, the system may set a default amount of non-educational time needed to access the non-educational activity and permit the user to access the non-educational activity until the user exhausts all available non-educational time that the user had available.

The system determines the amount of non-educational time available from data in the user profile (step 406). The system determines whether the user has sufficient time to complete the non-educational activity based on information in the user profile and the amount of time needed to complete the non-educational activity (step 408). If the amount of time needed to complete the non-educational activity is less than the amount of non-educational time available the system permits the user to access the non-educational activity (step 410). If not, the system denies the user access to the non-educational activity. In some implementations, the system identifies a second educational task that when completed permits the user to complete the non-educational activity (step 412). The system identifies the second educational task by calculating an educational value score needed. The system calculates the educational value score needed based on the amount of time needed to complete the non-educational activity. The system suggests to the user a second educational task with an educational value score greater than or equal to the calculated educational value score. The system tracks the usage of the non-educational time and updates the available non-educational time in the user profile.

Embodiments of the subject matter and the operations described in this document can be implemented in digital electronic circuitry, or in computer software, firmware, or hardware, including the structures disclosed in this document and their structural equivalents, or in combinations of one or more of them. Embodiments of the subject matter described in this document can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this document can be implemented as operations performed by a data processing apparatus on data stored on one or more computer-readable storage devices or received from other sources. The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this document can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this document can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this document, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this document contains many specific implementation details, these should not be construed as limitations on the scope of any inventions or of what may be claimed, but rather as descriptions of features specific to particular embodiments of particular inventions. Certain features that are described in this document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer implemented method, the method comprising:
receiving, in a computer system, from a first content provider of a first educational task, an indication that a user has completed the first educational task, the first educational task being one of a plurality of educational tasks, each educational task being associated with a respective educational value score;
calculating, in the computer system, a first educational value score for the first educational task based on (i) a first educational resource score, (ii) a first educational difficulty score, and (iii) a first user-specific parent selection score of the first educational task;
calculating, in the computer system, a first amount of earned non-educational time based on the first educational value score and adding the first amount to a total amount of earned non-educational time maintained in a user profile of the user;
identifying, by the computer system, a second educational task of the plurality of educational tasks having a second educational value score that is greater than the first educational value score;
providing, by the computer system, data identifying the second educational task to the user;
receiving, in the system, from a second content provider of the second educational task, an indication that the user has completed the second educational task; and
in response, updating, in the computer system, the total amount of earned non-educational time associated with the user profile of the user using a second amount of earned non-educational time for completing the second educational task.

2. The method of claim 1, wherein the second educational task of the plurality of educational tasks having a second educational value score has a second educational difficulty score greater than the first educational difficulty score and a second user-specific parent selection score that is at least equal to the first user-specific parent selection score.

3. The method of claim 1 or 2, wherein calculating the first amount of earned non-educational time comprises:
calculating the first amount of earned non-educational time as W x FEVS, wherein W is a weighting factor and FEVS is the first educational value score.

4. The method of claim 1, 2 or 3, further comprising:
receiving an indication from the user that the user requests a non-educational activity;
determining that there is non-educational time to perform the non-educational activity; and
permitting the user access to the non-educational activity.

5. The method of claim 4, further comprising:
receiving an indication that the user has completed the non-educational activity; and
in response, determining a total amount of remaining non-educational time by subtracting time spent by the user on the non-educational activity from the total amount of earned non-educational time, and
updating the total amount of earned non-educational time maintained in the user profile of the user with the total amount of remaining non-educational time.

6. The method of any preceding claim, wherein the first educational resource score is a measure of educational content in a resource that includes the first educational task.

7. The method of any preceding claim, wherein the first educational difficulty score indicates a grade level for the first educational task based on grade level standards.

8. The method of any preceding claim, wherein the first user-specific parent selection score is a user-specific attribute of the first educational task that is configured by a parent to adjust the first educational value score of the first educational task for the user.

9. A system, comprising:
one or more computers;
one or more storage devices storing instructions that, when executed by the one or more computers, cause the one or more computers to perform the method of any preceding claim.

10. A computer storage medium encoded with a computer program, the program comprising instructions that when executed by one or more computers cause the one or more computers to perform the method of any of claims 1 to 8
